# EUROPEAN PATENT SPECIFICATION

(11) **EP 4 155 836 B1**
(45) Date of publication and mention of the grant of the patent: **22.04.2026**
(21) Application number: 22197243.3
(22) Date of filing: 22.09.2022
(51) Int. Cl.: G04G 17/04, G04G 21/02, G06F 1/16

(54) **WEARABLE ELECTRONIC DEVICE HAVING A DIGITAL CAMERA ASSEMBLY**
TRAGBARE ELEKTRONISCHE VORRICHTUNG MIT EINER DIGITALKAMERAANORDNUNG
DISPOSITIF ÉLECTRONIQUE PORTABLE AYANT UN ENSEMBLE CAMÉRA NUMÉRIQUE

(30) Priority: 23.09.2021 US 202163247662 P; 25.08.2022 US 202217895987
(43) Date of publication of application: 29.03.2023
(60) Divisional application: 26164724.2
(73) Proprietor: Apple Inc., Cupertino CA 95014 (US)
(72) Inventor: SPENCER, Maegan K., Cupertino, 95014 (US); BOOZER, Brad G., Cupertino, 95014 (US); WERNER, Christopher M., Cupertino, 95014 (US); DAIGLE, Joshua L., Cupertino, 95014 (US); STONE, Riley K., Cupertino, 95014 (US)
(74) Representative: Rooney, John-Paul

(56) References cited:
- EP-A1- 2 910 180
- CN-U- 210 377 073
- US-A1- 2020 289 001
- US-A1- 2021 076 545

## Description

### CROSS-REFERENCE TO RELATED APPLICATION(S)

This application is a nonprovisional patent application of and claims the benefit of U.S. Provisional Patent Application No. 63/247662, filed September 23, 2021 and titled "Wearable Electronic Device Having A Digital Camera Assembly".

### FIELD

The provided description generally relates to electronic devices and, in particular, to a wearable electronic watch.

### BACKGROUND

Modern consumer electronics, such as so-called "smart devices," typically include a display, such as a light-emitting diode (LED) display, in order to provide graphical information to a user of a particular device. Displays typically take up a large portion of an electronic device so that a graphical user interface displayed on the display appears clear and of a size suitable for user perception. Wearable electronic devices, including wearable smart devices such as smart watches, typically include large displays to display the current time and other types of graphical information. As wearable electronic devices are typically worn on a body part of a user, such as a head, wrist, or arm, wearable electronic devices typically require a form factor that does not interfere with a user's range of motion during user activity.

Cameras may be desirably integrated into an electronic device so that a user may use the electronic device to generate images and/or video. However, due to the large amount of space utilized by a display or other electronic components, cameras or other optical systems incorporated into a wearable electronic device may interfere with the user's range of motion during user activity.

EP 2 910 180 A1 discloses a wearable device that is worn on the human body, e.g., on a wrist, arm, etc. and may be equipped with a variety of functions.

US 2020/289001 A1 discloses a wearable device has a housing containing electronics and a band that retains the wearable device on a user's arm.

CN 210 377 073 U discloses an intelligent watch integrating human face recognition, heart rate detection and body temperature detection.

US 2021/076545 A1 discloses an electronic device that can include a housing defining an aperture and at least partially defining an internal volume of the electronic device, an electromagnetic radiation emitter and an electromagnetic radiation detector disposed in the internal volume, and an optical component disposed in the aperture.

### SUMMARY

There is provided a wearable electronic watch according to the appended claims.

### BRIEF DESCRIPTION OF THE DRAWINGS

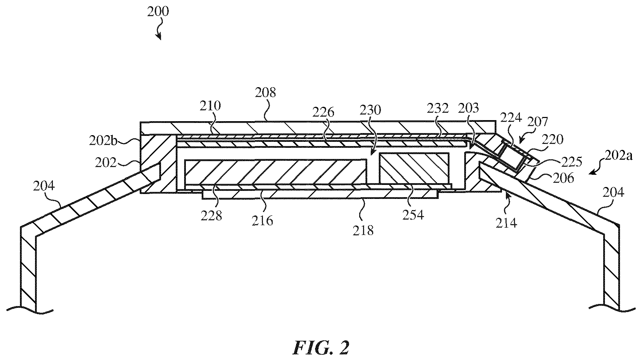

Reference will now be made to representative embodiments illustrated in the accompanying figures. Similar reference numerals have been used, where practicable, to designate similar features. The embodiment relating to figure 2 and corresponding description passages is covered by the claims. However, the embodiments relating to the remaining figures and corresponding description passages are either not covered by the claims or useful for understanding the invention.
FIGs. 1A-1B depict components of an example wearable electronic device, as described herein.
FIG. 2 illustrates a cross-section of an example wearable electronic device including a digital camera assembly and other internal components of the wearable electronic device, as described herein.
FIGs. 3A-3H depict example implementations of a protrusion defined by a housing of a wearable electronic device, as described herein.
FIGs. 4A-4B illustrate a detailed view of an orientation and installation process of an example digital camera assembly with respect to a housing of an example wearable electronic device, as described herein.
FIGs. 5A-5B illustrate example representations of a digital camera assembly integrated within a housing of a wearable electronic device with respect to a band slot, as described herein.
FIGs. 6A-6B illustrates an example wearable electronic device including a band formed around a camera cavity, as described herein.
FIGs. 7A-7C illustrate example digital camera assemblies, as described herein.
FIGs. 8A-8C illustrate example implementations of a digital camera assembly within a cavity defined by a side wall of a wearable electronic device and positioned between a band slot and a electroacoustic transducer, as described herein.
FIGs. 9A-9C illustrate example implementations of a digital camera assembly within a cavity defined by a side wall of the wearable electronic device and positioned between a rotatable crown and a button, as described herein.
FIGs. 10A-10B depict an example implementation of a digital camera assembly positioned to capture light through a rear surface of a wearable electronic device, as described herein.
FIGs. 11A-11D illustrate an example implementation of digital camera assemblies positioned within respective notches of a display of a wearable electronic device, as described herein.

The use of cross-hatching or shading in the accompanying figures is generally provided to clarify the boundaries between adjacent elements and to facilitate legibility of the figures. Accordingly, neither the presence nor the absence of cross-hatching or shading conveys or indicates any preference or requirement for particular materials, material properties, element proportions, element dimensions, commonalities of similarly illustrated elements, or any other characteristic, attribute, or property for any element illustrated in the accompanying figures.

Additionally, it should be understood that the proportions and dimensions (either relative or absolute) of the various features and elements (and collections and groupings thereof) and the boundaries, separations, and positional relationships presented therebetween, are provided in the accompanying figures merely to facilitate an understanding of the various embodiments described herein and, accordingly, may not necessarily be presented or illustrated to scale, and are not intended to indicate any preference or requirement for an illustrated embodiment to the exclusion of embodiments described with reference thereto.

### DETAILED DESCRIPTION

The provided disclosure generally relates to electronic devices and, more specifically, to an integration of an optical device, such as a digital camera assembly, positioned within a portion of a housing of a wearable electronic device. As provided, a wearable electronic device, an integrated optical device, and associated components comprise a number of features that will become apparent with reference to the appended figures and associated description.

In example wearable electronic devices, components including batteries, processors, displays, and electrical contacts (e.g., for electromechanical buttons) may be provided. Wearable electronic devices may additionally have a particular form factor and/or material so as to minimize the amount of interference a wearable electronic device has with a wearer of the wearable electronic device. For example, an electronic watch, as an example of a wearable electronic device, may be worn on a wrist of a user while the user is performing activities such as playing a musical instrument, engaging in sport (e.g., tennis, golf, or biking), driving, or performing any other type of activity. While certain electrical components, such as a camera, may perform desirable functions, the integration of such components may result in a bulky device which may hinder user performance, may be uncomfortable to wear, or may be unsuited for performing certain functions (e.g., a camera disposed within a wearable electronic device may be awkward to position when capturing optical input). Additionally, low-quality components may not meet a user's quality expectations (e.g., a low-quality camera may produce low-quality images).

The embodiments described herein are generally related to a wearable electronic watch (also referred to as a "smart watch" or "watch"), and more particularly to the integration of an optical device, such as a digital camera assembly, positioned within a housing of a wearable electronic watch. An optical device may refer to any instrument which receives or emits light, including visible, infrared, or ultraviolet light. Non-limiting examples of optical devices include cameras (e.g., a digital camera assembly); light-emitting elements; proximity sensors; laser diodes; self-mixing interferometry sensors; light detection and ranging (LIDAR) sensors; and facial recognition systems, fingerprint sensors, or other forms of biometric sensors. The term "digital camera assembly," as used herein, may refer to any device that receives light or optical input and produces an electrical signal or data. The electrical signal or data may be stored as a digital image or in any other appropriate digital format. Further, while the term "watch" or "smart watch" may be used, it is understood that any electronic device, including, but not limited to, wearable electronic devices, may be used in accordance with the provided disclosure. For example, wearable electronic devices not including a display may be used in accordance with the provided disclosure. Additional non-limiting examples of wearable electronic devices include health monitoring devices, head-mounted displays, pedometers, electronic rings, global positioning system (GPS) devices, or any combination thereof. A wearable electronic device may be worn on any appropriate body part of a user, including an ankle, a leg, an arm, a wrist, a chest, or other body part.

As described herein, a wearable electronic device includes a digital camera assembly positioned within a housing of the wearable electronic device. The digital camera assembly may be used for a variety of purposes, including, as non-limiting examples, facial identification, fingerprint sensing, scanning a Quick Response (QR) code, video conferencing, biometric monitoring (e.g., heart rate monitoring), photography, video or image capture, or any combination thereof. To perform one or more of these functions, the digital camera assembly is positioned within a portion of the housing such that the digital camera assembly can be directed toward a subject. The housing includes a protrusion extending at least partially over a band slot configured to receive a band, or strap, that couples the housing with a body part of a user (e.g., a user's wrist). The protrusion defines an internal cavity (e.g., a camera cavity) configured to receive a digital camera assembly, an electrical coupling element, a lens, and/or other associated components. The protrusion is provided at an angle with respect to a surrounding portion of the housing in order to establish a viewing angle for the digital camera assembly positioned within the protrusion. In the embodiment covered by the claims, the digital camera assembly is integrated into the wearable electronic device Trramy through a front surface of the wearable electronic device, as covered by independent claim 1.

A digital camera assembly of the provided disclosure may be utilized to perform a number of image-related processes including, object detection, machine vision, and visual inertial odometry (VIO). In an example VIO process, a digital camera assembly may be used to capture movement of a user's body or other objects during certain activities. The digital camera assembly may generate video or series of images of a user while the user is playing a sport or performing a gesture in order to analyze a movement or action. Using a VIO process, the camera can be used to obtain a high degree of motion sensing accuracy, which may be used to monitor, detect, and/or predict a user's motion or gesture based on certain characteristics. Additional sensors (e.g., accelerometers, gyroscopes, gravitometers) may be used to obtain data that can supplement the image or video captured by the camera for use in a VIO process.

In accordance with the provided disclosure, a digital camera assembly is integrated into the wearable electronic device in a way so as to minimize an effect of the digital camera assembly on other electronic components and/or a form factor of the wearable electronic device. For example, in implementations where a digital camera assembly is positioned within an internal cavity (e.g., camera cavity) of a protrusion, the digital camera assembly extends from the housing, over a band slot, and away from a display, a battery, a circuit assembly, or sensors of the wearable electronic device. Likewise, the protrusion may be shaped to avoid interfering with geometry of the band slot, so that a band/strap may still be permitted to couple with the housing of the wearable electronic device. The protrusion at least partially defines at least one band slot. In implementations without a protrusion, which are not covered by the claims, the digital camera assembly may be positioned within the housing and within a camera cavity distinct from an internal cavity comprising other internal components such as antennas, batteries, or digital crowns.

The digital camera assembly may be coupled to internal circuitry, such as a battery, of the wearable electronic device and may be of sufficient quality to produce images and/or videos meeting a user's quality expectations. For example, a digital camera assembly in accordance with the provided disclosure may have a video resolution of, for example, 720p, 1080p, 1440p, 2K, or 4K. A frame rate of the digital camera assembly is not particularly limited and may, in some cases, be from 30 frames per second (fps) to 60 fps, though higher or lower fps values may additionally be used either natively or in accordance with certain modes (e.g., a low fps mode may be initiated to conserve battery). An image quality of the digital camera assembly may be between 0.9 megapixels (MP) to 12 MP. The image produced by the digital camera may be between 0.1 and 7 MP. The image produced by the digital camera may be between 0.1 and 3 MP. The image produced may be any other resolution as controlled either by specifications of the digital camera assembly or settings associated with the wearable electronic device.

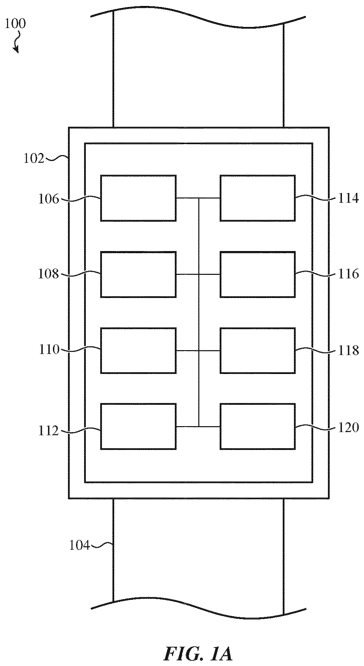

These and other embodiments are discussed below with reference to FIGs. 1A-11D. However, those skilled in the art will readily appreciate that the detailed description given herein with respect to these figures is for explanatory purposes only and should not be construed as limiting.

FIGs. 1A-1B depict a wearable electronic device 100 including a housing 102 that defines a camera cavity 125 configured to secure a digital camera assembly, details of which are discussed herein. The housing 102 may further define a front surface, a back surface, a first side surface, and a second side surface. The first side surface and the second side surface may collectively be referred to as a pair of side surfaces.

The wearable electronic device 100 is depicted as an electronic watch, though this is merely one example of a wearable electronic device and the concepts discussed herein may apply equally or by analogy to other wearable electronic devices including head-mounted displays, health monitors, pedometers, rings, global positioning system (GPS) devices, or any combination thereof. In some implementations, the applied concepts may be applied to other electronic devices, such as a laptop computer, a mobile phone (e.g., smartphone), or a display monitor.

As depicted in FIG. 1A, the wearable electronic device 100 may include a housing 102 and a number of internal components. To the extent that multiple functionalities, operations, and structures are disclosed as being part of, incorporated into, or performed by the wearable electronic device 100, it should be understood that various embodiments may omit any or all such described functionalities, operations, and structures. Thus, different embodiments of the wearable electronic device 100 may have some, none, or all of the various capabilities, apparatuses, physical features, modes, and operating parameters discussed herein.

As shown in FIG. 1A, a wearable electronic device 100 includes a processing unit 106 operatively connected to computer memory 108. The processing unit 106 may be operatively connected to the memory 108 via an electronic bus or bridge. The processing unit 106 may include one or more computer processors or microcontrollers that are configured to perform operations in response to computer-readable instructions. The processing unit 106 may additionally include the central processing unit (CPU) of the device. Additionally or alternatively, the processing unit 106 may include other processors within the device including application specific integrated chips (ASIC) and other microcontroller devices.

The memory 108 may include a variety of types of non-transitory computer-readable storage media, including, for example, read access memory (RAM), read-only memory (ROM), erasable programmable memory (e.g., EPROM and EEPROM), or flash memory. The memory 108 may be configured to store computer-readable instructions, sensor values, and other persistent software elements. The memory 108 may additionally include various types of non-transitory computer-readable storage media including, for example, a hard-drive storage device, a solid-state storage device, a portable magnetic storage device, or other similar device.

In this example, the processing unit 106 is operable to read computer-readable instructions stored on the memory 108. The computer-readable instructions may adapt the processing unit 106 to perform the operations or functions described herein. In particular, the processing unit 106 and the memory 108 may be configured to cooperate with a sensor 116 (e.g., a digital camera assembly) to control the operation of a device. The computer-readable instructions may be provided as a computer-program product, software application, and so on.

As shown in FIG. 1A, the wearable electronic device 100 also includes a display 110. The display 110 may include a liquid-crystal display (LCD), organic light emitting diode (OLED) display, light emitting diode (LED) display, and so on. If the display 110 is an LCD, the display 110 may also include a backlight component that can be controlled to provide variable levels of display brightness. If the display 110 is an OLED or LED type display, the brightness of the display 110 may be controlled by modifying the electrical signals that are provided to display elements. The display 110 may correspond to any of the displays shown or described herein.

The wearable electronic device 100 may also include a battery 112 that is configured to provide electrical power to the components of the wearable electronic device 100. The battery 112 may include one or more power storage cells that are linked together to provide an internal supply of electrical power. The battery 112 may be operatively coupled to power management circuitry that is configured to provide appropriate voltage and power levels for individual components or groups of components within the wearable electronic device 100. The battery 112, via power management circuitry, may be configured to receive power from an external source, such as an AC power outlet. The battery 112 may store received power so that the wearable electronic device 100 may operate without connection to an external power source for an extended period of time, which may range from several hours to several days.

In some embodiments, the wearable electronic device 100 includes one or more input and/or output devices 114. An input device may refer to a device that is configured to receive user input. Input devices may include, for example, a push button, a touch-activated button, a keyboard, or a key pad (including any combination of these or other components). In some embodiments, the input device may provide a dedicated or primary function, including, for example, a power button, volume buttons, home buttons, scroll wheels, and camera buttons. Generally, a touch sensor or a force sensor may also be classified as an input device. However, for purposes of this illustrative example, the touch sensor and force sensor 118 are depicted as distinct components within the wearable electronic device 100. An output device may refer to a device that is configured to produce an output that is perceivable by a user. Output devices may include, for example, a speaker, a light source (e.g., an indicator light), an audio transducer, or a haptic actuator and/or device.

The wearable electronic device 100 may also include one or more sensors 116, such as a digital camera assembly. In some cases, the sensors 116 may include a sensor that determines conditions of an ambient environment external to the wearable electronic device 100, such as a pressure sensor, a temperature sensor, or a liquid sensor. The sensors 116 may also include a sensor that detects inputs provided by a user to a crown of the wearable electronic device 100. The sensor 116 may include an optical sensing element (e.g., a digital camera assembly), such as a charge-coupled device (CCD), complementary metal-oxide-semiconductor (CMOS), and so on. The sensor 116 may correspond to any sensors described herein or that may be used to provide the sensing functions described herein. Any number of sensors 116 may be provided in accordance with the wearable electronic device 100.

The wearable electronic device 100 may also include a touch and force sensor 118 that is configured to determine a location of a touch on a touch-sensitive surface of the wearable electronic device 100 (e.g., an input surface defined by the portion of a cover over a display). The touch and force sensor 118 may use or include capacitive sensors, resistive sensors, surface acoustic wave sensors, piezoelectric sensors, strain gauges, and so on. In some cases, the touch and force sensor 118 associated with a touch-sensitive surface of the wearable electronic device 100 may include a capacitive array of electrodes or nodes that operate in accordance with a mutual-capacitance or self-capacitance scheme. The touch and force sensor 118 may be integrated with one or more layers of a display stack (e.g., a display) to provide the touch-sensing functionality of a touchscreen. Moreover, the touch and force sensor 118, or a portion thereof, may be used to sense motion of a user's finger as it slides along a surface of a crown, as described herein.

The touch and force sensor 118 may additionally be configured to receive and/or detect force inputs applied to a user input surface of the wearable electronic device 100. The touch and force sensor 118 may use or include capacitive sensors, resistive sensors, surface acoustic wave sensors, piezoelectric sensors, strain gauges, and so on. In some cases, the touch and force sensor 118 may include or be coupled to capacitive sensing elements that facilitate the detection of changes in relative positions of the components of the force sensor (e.g., deflections caused by a force input). The touch and force sensor 118 may be integrated with one or more layers of a display stack (e.g., a display) to provide force-sensing functionality of a touchscreen. The touch and force sensor 118 may be a single device in some implementations. In alternative implementations, separate touch sensors and force sensors may be provided.

The wearable electronic device 100 may also include a communication module 120 that is configured to transmit and/or receive signals or electrical communication from an external or separate device. The communication module 120 may be configured to couple to an external device via a cable, adaptor, or other type of electrical connector. In some embodiments, the communication module 120 may be used to couple the wearable electronic device 100 to an accessory, including a dock or case, a stylus or other input device, smart cover, smart stand, keyboard, or other device configured to send and/or receive electrical signals.

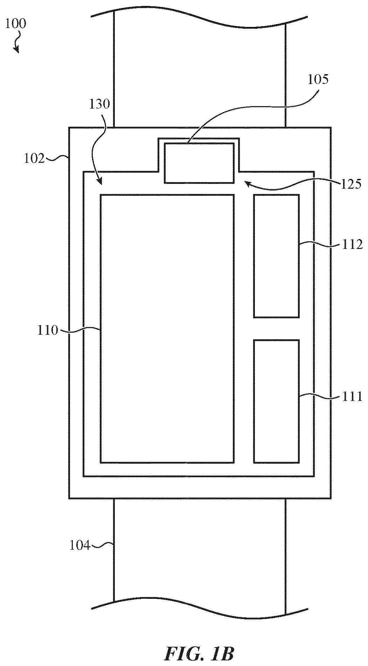

FIG. 1B depicts an example representation of a wearable electronic device 100, such as described with respect to FIG. 1A. In particular, the wearable electronic device 100 depicted in FIG. 1B may generally depict a layout of a wearable electronic device 100 in accordance with the provided disclosure. It is noted that the wearable electronic device 100 is merely exemplary and any orientation may be provided in accordance with the provided disclosure.

As discussed with respect with FIG. 1A, the wearable electronic device 100 may include a housing 102 defining an exterior surface of the wearable electronic device 100. A band 104 may be coupled with the housing 102 and may be used to secure the wearable electronic device 100 to a body part of a user (e.g., a user's wrist). As discussed herein, the band 104 may engage with the housing 102 via one or more engagement features of the housing 102. One example of an engagement feature is a band slot, which may be formed as a channel with respect to front and back surfaces of the housing 102.

The band 104 may include multiple band components including multiple straps and/or band fastening components or clasp elements. For example, the band 104 may include a loop (e.g., a single-strap band) or may include two individual straps connectable by a clasp or other type of fastener. The band 104 may be formed from any appropriate material, such as a fabric, a plastic, a rubber, a metal, any combination thereof, and so on, and may be configured to attach the wearable electronic device 100 to a body part of a user, such as a user's wrist, arm, or hand. In some cases, a band slot may be defined by the front surface of the housing 102 and may extend between a pair of side surfaces of the housing 102 and an opposing band slot may be defined by a back surface of the housing 102 and may extend between the pair of side surfaces .

The housing 102 may, in some cases, comprise a metal and/or glass enclosure component. In addition, the housing 102 may at least partially define an internal cavity 130 in which components of the wearable electronic device 100 may be positioned (see, e.g., FIG. 2). The housing 102 may further define one or more holes so that components such as a button, a rotatable crown 113, and a display 110 may extend at least partially through the one or more holes. In some implementations, the housing 102 may be a unibody housing and may be formed from a single piece of material, such as a single piece of machined metal or glass. In other implementations, the housing 102 may be formed from a number of pieces welded, glued, or otherwise bonded together (e.g., a rear surface of the housing 102 may be formed from a glass material and a side/top surface of the housing 102 may be formed from a metallic material). The housing 102 may include, either in part or in its entirety, an enclosure component such as a metal or glass enclosure component that at least partially surrounds a display 110 and/or transparent cover. The housing 102 may be formed from any number of materials, including a plastic, a metal, a polymer, glass, any combination thereof, and so on.

The housing 102 may define a number of walls that form a shape of the housing 102. The number of walls may include a front wall (defining a front surface), a back wall (defining a back surface), and two side walls (defining respective side surface which may be referenced as a pair of side surfaces). Respective band slots may be formed in the front wall and the back wall, such that the band slots form a channel extending through the front wall and the back wall, respectively, along a width of the enclosure 102. Further, the two side walls may not have any band slots formed therethrough, as the band 104 may not be configured to attach to the side walls. The number of walls may take any form and may have rounded edges in some implementations.

The wearable electronic device 100 may further include a digital camera assembly 105 positioned within a portion of the housing 102 (e.g., a cavity defined by the housing 102, as described with respect to FIG. 2). The digital camera assembly 105 may be any type of camera and may convert received light into electrical signals (e.g., as picture and/or video data). In some implementations, the digital camera assembly 105 may be positioned within a camera cavity 125 defined by a protrusion of the housing 102.

The wearable electronic device 100 may additionally include a display 110 positioned within an opening defined by the housing 102. The display 110 may display graphical outputs such as graphical user interfaces (GUIs), user interface elements (e.g., buttons, sliders, or toggles), text, lists, photographs, videos, and so on. The display 110 may be a liquid crystal display (LCD), an organic light emitting diode display (OLED), a light emitting diode display (LED), or any other suitable display technologies.

The display 110 may include or be associated with touch sensors and/or force sensors that extend along the display and which may utilize any suitable sensing elements, systems, or techniques. Using one or more touch sensors, the wearable electronic device 100 may detect touch inputs applied to the display 110, or a transparent cover overlying the display 110, including locations of touch inputs, the speed of touch inputs, the direction of touch inputs, and so on. Using one or more force sensors, the wearable electronic device 100 may detect amounts or magnitudes of forces associated with touch events applied to the display 110 or an overlying transparent cover. The touch and/or force sensors may detect various types of user inputs to control or modify the operation of the wearable electronic device 100, including taps, swipes, multi-finger inputs, single-finger gestures, and so on. Further, the touch and/or force sensors may detect motion of an object, such as a user's finger, as it is interacting with a rotatable crown 112 of the wearable electronic device 100. A display including any touch and/or force sensors may be referenced as a touch sensitive display.

In some implementations, a transparent cover may be positioned over the display 110. The transparent cover may define a front face (e.g., a front surface) of the wearable electronic device 100. For example, the transparent cover may define substantially the entire front face and/or front surface of the wearable electronic device 100. The transparent cover may also define an input surface of the electronic device 100. For example, the wearable electronic device 100 may include touch and/or force sensors that detect inputs applied to the transparent cover. The transparent cover may be formed from or may include a variety of materials such as glass, sapphire, a polymer, a dielectric, and so on.

As discussed, the housing 102 of the wearable electronic device 100 may define multiple band slots formed at respective ends of the wearable electronic device 100. Each end of the housing 102 may define a distinct band slot such that respective band straps, or respective ends of a band, couple to the housing 102 at opposite sides, with respect to a display 110. A band slot may receive at least a portion of an associated band 104. The band slots may further define a channel and may extend through a width of the housing 102 (e.g., between side surfaces of the housing 102). As depicted in FIG. 2, the band slots may have a profile corresponding to a profile of the band 104, though any profile shape of the band slots may be used in accordance with the provided disclosure, including a rounded profile. In some implementations, the band slots may only partially extend through the width of the housing 102. In such cases, the ends of the band 104 may likewise have a shorter width with respect to the housing 102.

As discussed above, the band slots may be formed on opposite sides of the housing 102, with respect to an associated display 110 (e.g., on front and back surfaces). The band slots may additionally be formed as a channel extending across a width of the housing 102 and a portion of a band 104 may be received, slidably or otherwise, by the band slots so that the housing 102 is secured with the band 104.

The wearable electronic device may additionally include a rotatable crown 112 and a microphone 111. The microphone 111 may be any type of electromagnetic transducer and may convert sound waves into electric signals. The microphone 111 may be positioned within a cavity defined by the housing 102 and a hole may be provided through the housing 102 so that sound waves may be directed to the microphone 111.

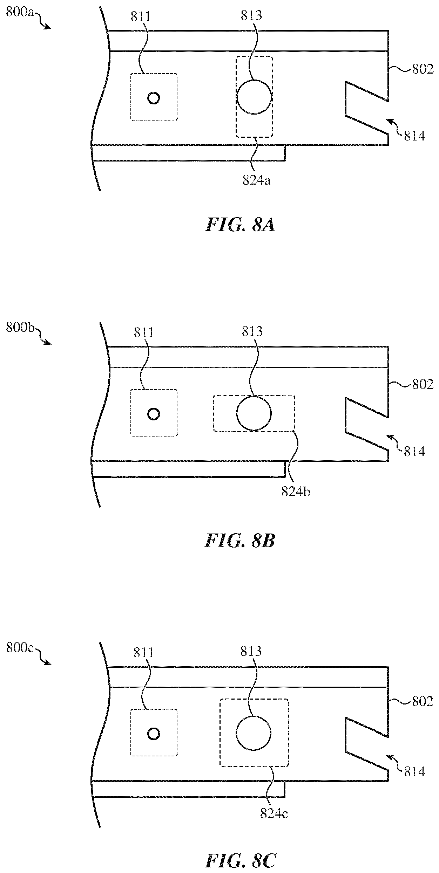

The rotatable crown 112 may likewise extend through an opening formed from the housing 102 and may be used to facilitate a variety of potential user interactions. The rotatable crown 112 may include a number of features, such as a knob, shaft, and spindle, and may define a round shape (e.g., a circle or oval). The exterior surface of the rotatable crown 113 may be textured, knurled, grooved, or may otherwise have features that affect a tactile feel of the rotatable crown 113. In some implementations, the rotatable crown 113 may be removed or relocated in favor of a camera or other optical sensor (see, e.g., FIGs. 8A-8C).

The wearable electronic device 100 may also include other inputs, switches, buttons, and so on. For example, the wearable electronic device 100 may include a button. The button may be a moveable/depressible button or may be a touch-sensitive region of the housing 102. The button may control various aspects of the wearable electronic device 100. For example, the button may be used to select icons, items, or other objects displayed on the display 110 (e.g., to activate or deactivate functions, like an alarm or an alert, to select a graphical element, and to initiate a phone call).

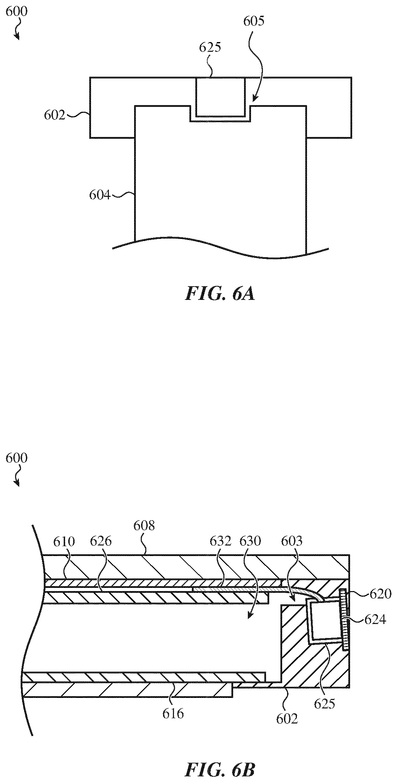

The housing 102 may further define a protrusion, which may, in some implementations, protrude from a surrounding portion of the housing 102 and may be referred to as a camera enclosure. The protrusion may define a camera cavity 125 which a digital camera assembly 105 can be positioned within. The protrusion may extend at least partially over a band 104 and/or a band slot. The protrusion may be formed at either end of the housing 102 and may, in some implementations, be formed at both ends of the housing 102 to respectively house two separate optical devices, which may be the same type of instrument (e.g., two cameras) or two different instruments (e.g., a camera and a proximity sensor are positioned within respective sensor enclosures). In some implementations, such as that depicted in FIGs. 6A-6B, a protrusion may be eliminated and a camera cavity 125, which does not significantly protrude from a housing, may be integrated into the housing of a wearable electronic device.

The protrusion may further define a through-hole extending through a wall of the protrusion. A lip or raised edge may surround the through-hole and a cover may be positioned within the through-hole. The through-hole may be formed as any shape including circular or polygonal shapes and the cover may be formed with a corresponding shape, though in some implementations the cover may have a shape different than a shape of the through-hole. The through-hole may extend through a wall of the protrusion such that a portion of a digital camera assembly positioned within the camera cavity 125 of the protrusion can be directed to objects outside of the protrusion (e.g., the digital camera assembly 105 may receive light from external subjects as received through the through-hole). The cover may be any suitable lens or transparent material and may, in some implementations, be sealed to prevent liquid from entering an internal cavity 130 of the housing 102. The cover may be formed from any transparent material including, for example, a glass, sapphire, ceramic, polymer, transparent plastic, or any combination thereof. In some implementations, the cover may be transparent to light in a non-visible spectrum (e.g., infrared or ultraviolet) and may appear opaque in a visible spectrum.

As discussed herein, the cover may be any lens or transparent cover that is transparent to a least a portion of the light usable by a digital camera assembly to produce images and/or video. The cover may be flat or may be shaped to provide a lensing or other optical function.

The protrusion may be integrated with respect to the surrounding housing 102 (e.g., as a unitary structure) and may be machined from a single piece of metal with the housing 102, though other materials, such as a glass or plastic, may be used in some implementations. In some cases, the protrusion is formed as a separate piece of material and may be bonded to the housing through fusion bonding techniques, adhesives, and so on. The protrusion may be formed from the same material as the housing 102 or may be formed from a different material.

The wearable electronic device 100 may, in some implementations, include additional components. For example, the wearable electronic device 100 may include a rear cover coupled to the housing 102 and defining at least a portion of the rear exterior surface of the wearable electronic device 100. The rear cover may be at least partially transparent and may be formed of or include any suitable material(s), such as sapphire, polymer, ceramic, glass, and so on. The rear cover may be positioned in an opening of the housing 102.

The rear cover may include a plurality of windows to allow light to pass through the rear cover to and from sensor components (e.g., a sensor array) within the wearable electronic device 100. For example, the rear cover may define an emitter window and a receiver window. While only one emitter window and receiver window are described, more emitter and/or receiver windows may be provided in different implementations. The emitter window and the receiver window may be defined by the material of the rear cover or may be separate components that are positioned in holes formed in the rear cover. The emitter window and the receiver window, and associated internal sensor components, may be used to determine biometric information of a user, such as a heart rate, blood oxygen concentration, and so on, as well as information such as a distance from the wearable electronic device 100 to an object (e.g., a user's wrist). The arrangement described is only one example arrangement and other window arrangements (including different numbers, sizes, shapes, and/or positions of the windows) may be used in accordance with the provided disclosure.

A digital camera assembly 105 positioned within a camera cavity 125 defined by the housing 102 may be configured for particular purposes. For example, the digital camera assembly 105 positioned within the housing 102 may be configured with a particular profile and at a particular angle. This may assist in directing the digital camera assembly to a particular object, such as when a user desires to capture light from the particular object. Additionally, the digital camera assembly may be used for text recognition (e.g., when directed toward written text), QR code detection and/or analysis, and so on.

FIG. 2 illustrates a cross-sectional view of an example wearable electronic device 200. The wearable electronic device 200 may be the same as the wearable electronic device 100 and may include the same or similar components as described above. Accordingly, details of the wearable electronic device described above may apply to the wearable electronic device 200 and, for brevity, will not be repeated here. Alternatively, the wearable electronic device 200 may be a distinct wearable electronic device.

The wearable electronic device 200 may include a transparent cover 208, a display 210 positioned underneath the transparent cover 208, a through-hole 207, a cover 220, a digital camera assembly 224, a first circuit assembly 226, a flexible circuit 232 coupling the digital camera assembly 224 with the first circuit assembly 226, a housing 202, a haptic device 254, a band 204, band slots 214, a rear cover 218, a second circuit assembly 216, a battery 228, and an internal cavity 230. The housing 202 may define a portion of an exterior surface of the wearable electronic device 200, including a front wall, a back wall, and one or more side walls as discussed with reference to FIGs. 1A-1B, and may further define internal walls surrounding the internal cavity 230. As discussed with respect to FIGs. 1A-1B, the housing 202 may define a front wall 202a and a back wall 202b separated by the internal cavity 230.

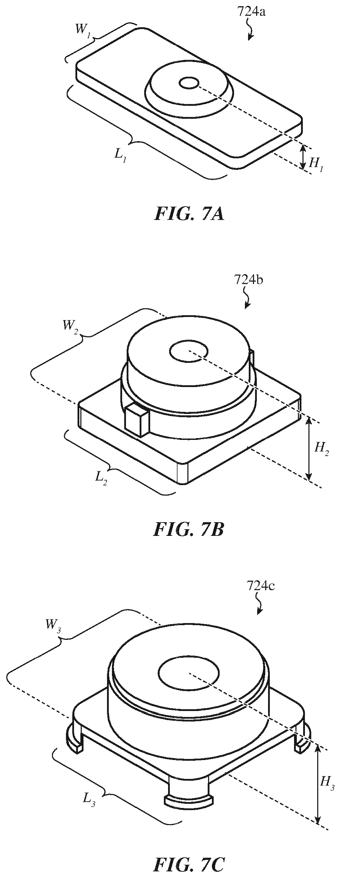

The housing 202 may further define a protrusion 206. The protrusion 206 may define a camera cavity 225 and an instrument, such as a digital camera assembly 224, may be placed within the camera cavity 225. The digital camera assembly 224 may be any type of camera, such as those discussed with respect to FIGs. 7A-7C, and may be configured to capture light used to generate images and/or video while a user is operating the wearable electronic device 200 (e.g., during a video call or picture-capturing operation). In some implementations, the digital camera assembly 224 may be positioned at a particular angle with respect to the transparent cover 208. For example, an angle of the digital camera assembly 224 may affect an ease of capturing light from an object while the wearable electronic device 200 is worn by a user. That is, certain angles may make obtaining photographs/video of the user or alternative subject difficult as the user may need to awkwardly orient their wrist to capture the desired subject. In order to provide an appropriate camera angle, the digital camera assembly 224 may be established at 30°-60° with respect to the transparent cover 208, though other angles may be used in some implementations and/or depending on a typical use of the digital camera assembly 224.

The protrusion 206 may be formed from the same material as the housing 202 and may be integrated with the housing 202 as a unibody housing. For example, both the protrusion 206 and the housing 202 may be formed as a unibody metallic housing, a unibody glass housing, a unibody ceramic housing, a unibody polymer housing, and so on. Features of the housing 202 or the protrusion 206 may be formed from any number of machining processes. For example, a drill may be used to form through-holes in the protrusion 206 or the housing 202. Other machining processes, such as milling, boring, or turning, may be used to form the housing 202 or the protrusion 206. In some implementations, the protrusion 206 may be bonded to the housing 202 by, for example, an adhesive, epoxy, weld, and so on.

The protrusion 206 may, as depicted in FIG. 2, extend at least partially over a band slot 214 and associated band 204 and may be positioned between a front surface defined by the housing 202 and one of the band slots 214 (e.g., a first band slot). Due to this arrangement, the protrusion 206 may at least partially define the band slot 214 such that a bottom wall of the protrusion 206 defines a top wall of the band slot 214. Though only one protrusion 206 and associated digital camera assembly 224 are depicted in FIG. 2, protrusions may be positioned over both band slots 214 in some implementations and may contain multiple digital camera assemblies or alternative sensors. The protrusion 206 may further include a through-hole 207 that extends through the protrusion 206 to join an external environment to the camera cavity 225. A cover 220 may be positioned over the through-hole 207 and may serve to seal the camera cavity 225 while still permitting the digital camera assembly 224 to receive light, as necessary to capture an image or video. It is appreciated that FIG. 2 only depicts one example implementation of the disclosure and other implementations may alternatively be used. The flexible circuit 232 may communicatively couple the digital camera assembly 224 to the first circuit assembly 226 and may be formed from, as an example, flexible wiring or a flexible printed circuit board with conductive traces.

The camera cavity 225 may be positioned inward from the through-hole 207 as illustrated in FIG. 2. As discussed, the through-hole 207 may be defined by an external surface of the housing 202. A digital camera assembly 224, or simply "camera," may be positioned within the camera cavity 225 and may be operably coupled to a first circuit assembly 226 by the flexible circuit 232.

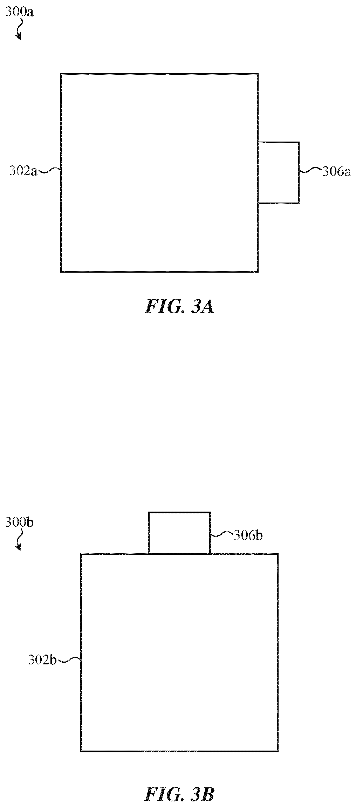

The housing 202 may further define a passage 203 extending between the camera cavity 225 with the internal cavity 230. The flexible circuit 232 may extend through the passage 203 when coupling the digital camera assembly 224 with the first circuit assembly 226. Additionally, as discussed with reference to FIGs. 3A-3H, the digital camera assembly 224 itself may pass through the passage 203 during an installation and/or removal process.

As depicted in FIG. 2, the transparent cover 208 may overlie at least part of a display 210 that is positioned at least partially within an internal cavity 230 defined by the housing 202. The display 210 may display graphical outputs such as described above with reference to FIGs. 1A-1B. The display 210 may be a liquid crystal display (LCD), an organic light emitting diode display (OLED), a light emitting diode display (LED), or any other suitable display technologies.

A first circuit assembly 226 may be positioned below the display 210 and may control aspects of the display 210 or other components of the wearable electronic device 200. The housing 202 may physically support the first circuit assembly 226, which may be mounted on a printed circuit board. The first circuit assembly 226 may comprise a number of components connected by conductive tracks, such as one or more processors, one or more resistors or capacitors, one or more diodes, one or more transistors, one or more integrated circuits, one or more batteries, and so on. A battery 228 may additionally be positioned within the internal cavity 230 and may be configured to provide power and/or voltage to any of the electrical components discussed herein. As depicted in FIG. 2, the battery 228 may have a size such that the volume of the internal cavity 230 is roughly twice the size of the battery 228, though it is appreciated that the battery 228 may have any size or shape with respect to the internal cavity 230.

A haptic device 254 may additionally be provided within the internal cavity 230. The haptic device 254 may include any number of elements, such as a moveable mass, operable to provide a haptic output to the wearable electronic device 200. For example, the haptic device 254 may vibrate in response to information received from one of the first circuit assembly 226 or the second circuit assembly 216. The haptic device 254 may provide a haptic output to the entire housing 202, the wearable electronic device 200, or any portion thereof, in response to a user input or in response to activity of the wearable electronic device 200. In some cases, the haptic device 254 may produce a haptic output along the external surface of the housing 202.

A second circuit assembly 216 may be provided underneath the battery 228 and the haptic device 254 and above the rear cover 218. The second circuit assembly 216 may control biometric operations and may be used to may be used to determine biometric information of a user, such as a heart rate, blood oxygen concentration, and so on, as well as information such as a distance from the wearable electronic device 200 to an object (e.g., a user's wrist) via the rear cover 218. In some implementations, the second circuit assembly 216 may be coupled to a sensor array associated with the collection of biometric information and provided proximate to the rear cover 218. The second circuit assembly 216 may be supported by the housing 202 and/or the rear cover 218 and may be mounted on a printed circuit board. As with the first circuit assembly 226, the second circuit assembly 216 may include any number of components such as one or more processors, one or more capacitors or resistors, one or more integrated circuits, and so on.

FIGs. 3A-3H depict example implementations of a protrusion with respect to a housing of a wearable electronic device. The representations of the wearable electronic devices depicted in FIGs. 3A-3H are simplified, but features will become apparent with respect to the associated description.

In FIG. 3A, a first wearable electronic device 300a having a first housing 302a may be provided. The housing 302a may be similar to those as discussed with respect to FIGs. 1A-2, as described above, and may be a unibody housing with machined holes and/or openings for certain components (e.g., a display). As discussed above, the housing 302a may be formed from, for example, a metal, glass, or plastic material. The housing 302a may further define a protrusion 306a. The protrusion 306a may be integrated with the housing 302a such that the protrusion 306a and the housing 302a form a single, unified piece. However, in some examples, the protrusion 306a may be affixed to the housing 302a through any manners of bonding.

The protrusion 306a may define at least a portion of a band slot, or channel, formed within the housing 302a and configured to receive a band. In FIG. 3A, the protrusion 306a only partially extends across a width of the housing 302a. As discussed with respect to FIG. 2, a digital camera assembly may be positioned within a camera cavity defined by the protrusion 306a.

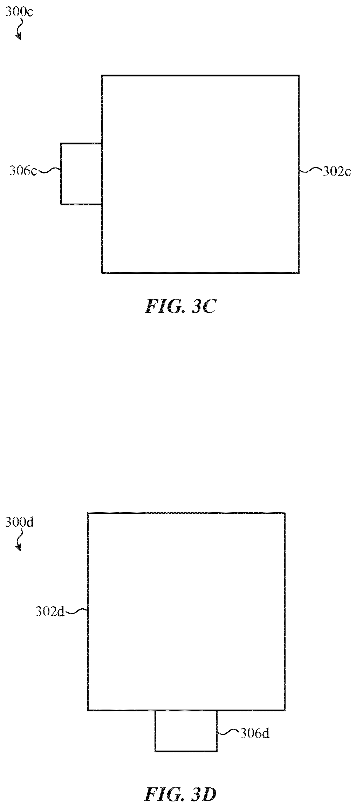

FIGs. 3B-3D depict other example arrangements of a protrusion. For example, FIG. 3B depicts an example wearable electronic device 300b having a protrusion 306b extending from a side surface thereof. That is, the protrusion 306b may extend from a surface of the housing 302b that does not define a band slot and may define openings for a number of buttons or crowns. FIG. 3C depicts an example wearable electronic device 300c having a protrusion 306c extending from a back surface thereof. That is, the protrusion 306c may extend from a surface of the housing 302c that is opposite from the example depicted in FIG. 3A. FIG. 3D depicts an example wearable electronic device 300d having a protrusion 306d extending from a side surface thereof. That is, the protrusion 306d may extend from a surface of the housing 302d that is opposite from the example depicted in FIG. 3B.

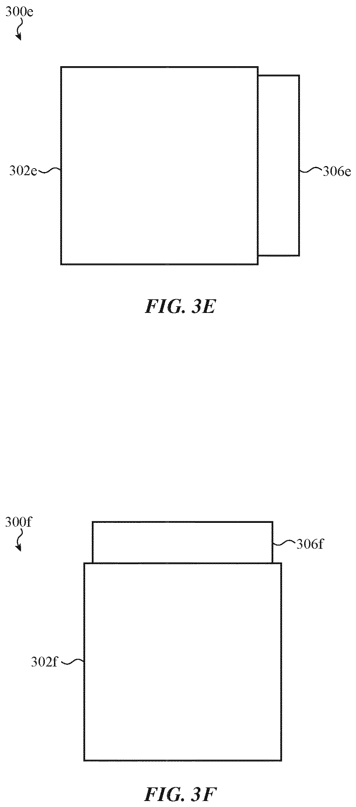

FIG. 3E depicts an example wearable electronic device 300e having a housing 302e and a protrusion 306e. The protrusion 306e may be integrated with the housing 302e and may be provided on a wearable electronic device 300e (e.g., the wearable electronic device of FIGs. 1A-2). Unlike the embodiments depicted in FIG. 3A-3D, the protrusion 306e may be lengthened so as to extend across an entire width of the housing. As the protrusion 306e is lengthened, the protrusion 306e may at least partially define an entire length of an associated band slot, or channel, formed within the housing 302e and configured to receive a band. The protrusion 306e may further define a camera cavity and a digital camera assembly may be positioned within the camera cavity. Though the protrusion 306e is lengthened, with respect to the protrusion 306a, a digital camera assembly positioned within the protrusion may, in some implementations, not be lengthened to a corresponding extent.

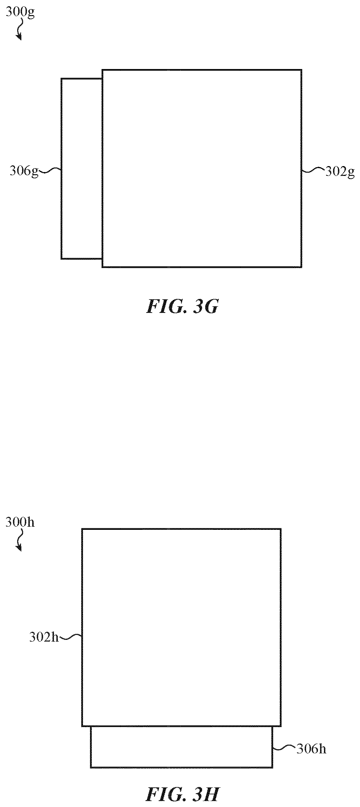

FIGs. 3F-3H depict other example arrangements of a protrusion extending across a width of a housing. For example, FIG. 3F depicts an example wearable electronic device 300f having a protrusion 306f extending from a side surface thereof. That is, the protrusion 306f may extend from a surface of the housing 302f that does not define a band slot and may define openings for a number of buttons or crowns. FIG. 3G depicts an example wearable electronic device 300g having a protrusion 306g extending from a back surface thereof. That is, the protrusion 306g may extend from a surface of the housing 302g that is opposite from the example depicted in FIG. 3E. FIG. 3H depicts an example wearable electronic device 300h having a protrusion 306h extending from a side surface thereof. That is, the protrusion 306h may extend from a surface of the housing 302h that is opposite from the example depicted in FIG. 3F.

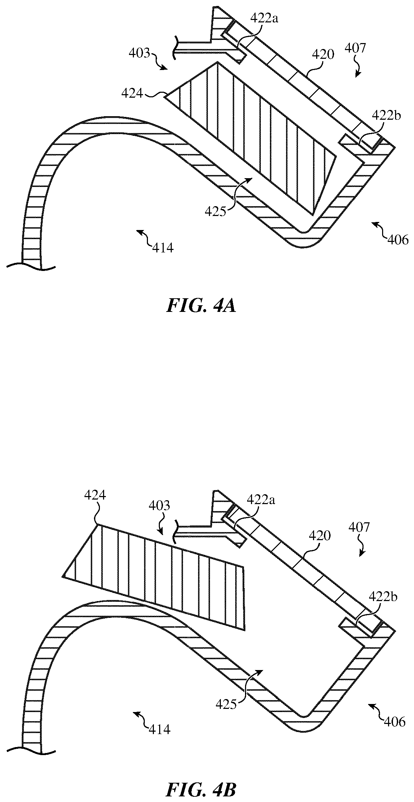

FIGs. 4A-4B illustrate a detailed view of an orientation of a digital camera assembly 424 within a camera cavity 425. As described above, and as depicted in FIGs. 4A-4B, a digital camera assembly 424 may be positioned within a camera cavity 425 as defined by a protrusion 406. The protrusion 406 may at least partially extend over the band slot 414 such that a bottom wall of the protrusion 406 defines a top wall of the band slot 414. The detailed view depicted in FIGs. 4A-4B may generally correspond to the wearable electronic devices described with respect to FIGs. 1A-3B or may be used in accordance with any other appropriate electronic device.

A top wall of the protrusion 406 may have a through-hole 407 extending through a portion of the top wall. The through-hole 407 may be partially defined by a first ledge 422a and a second ledge 422b. A cover 420 may be positioned within the through-hole 407 such that the cover 420 rests on respective surfaces of the first ledge 422a and the second ledge 422b. The ledges 422a/422b and/or the through-hole 407 may be formed by a T-cutter and the orientation of the ledges 422a/422b with respect to the through-hole 407 may be referenced as a T-cut. In some implementations, a diameter of the through-hole 407, with respect to the ledges 422a/422b may be between 2 millimeters (mm) and 3 mm, though any diameter value is possible in accordance with the provided disclosure. A width of the ledges 422a/422b may be between about 0.5 mm and 1 mm, though any ledge width value suitable to support a cover 420 is possible in accordance with the provided disclosure. In some implementations, a bonding agent and/or seal may be provided between the ledges 422a/422a and the cover 420.

As depicted in FIGs. 4A-4B, a diameter of the through-hole 407 may be less than a diameter of the digital camera assembly 424. Due to this arrangement, it may not be possible and/or practicable to install the digital camera assembly 424 through the through-hole 407 itself. Instead, as discussed with respect to FIGs. 4A-4B, the digital camera assembly 424 may be installed and/or removed through the passage 403. The passage 403 may have a diameter and/or size sufficient to receive the digital camera assembly 424.

FIG. 4B depicts an example installation and/or removal process of the digital camera assembly 424 with respect to a passage 403. The camera cavity 425 may be open to an additional internal cavity (e.g., internal cavity 230) defined by the housing (e.g., housing 202) via a passage 403. The digital camera assembly 424 may be slidably removeable from and/or insertable into the camera cavity 425 during an installation or removal process by moving through the passage 403. When the digital camera assembly 424 is installed into the camera cavity 425, the digital camera assembly 424 may be supported by interior walls of the protrusion 406 (e.g., a bottom wall and/or a side wall) and may, thereby, be secured within the camera cavity 425. The digital camera assembly 424 may be positioned to capture light through the cover 420 and may be communicatively coupled (e.g., via a flexible circuit) to internal circuitry associated with the wearable electronic device. Once installed (e.g., as in FIG. 4A and via the passage 403), the digital camera assembly 424 may be secured and may resist removal (e.g., by physical properties of walls defining the passage 403).

As depicted in FIGs. 4A-4B, the protrusion 406 is defined by the housing and, in particular, a front surface of the housing (see, e.g., FIGs. 1A-2). The band slot 414 is configured to receive a portion of a band and a camera cavity 425 is positioned above the band slot 414. At least one wall defining the camera cavity 425 may additionally define at least part of the band slot 414. The camera cavity 425 may be positioned between a front surface of the housing and the band slot 414. A digital camera assembly 424 may be positioned within the camera cavity 425 and may be configured to receive optical input through a through-hole 407 and/or cover 420.

The digital camera assembly 424 installed within the protrusion 406 may be operated when either worn by a user (e.g., as a watch) or when not being worn (e.g., a user is holding a watch without securing the watch to their wrist). When worn, the protrusion 406 may be formed so as to position the digital camera assembly 424 at a particular angle, so that video or images of a surrounding environment or a user (e.g., as a selfie) may be easily captured. In some implementations, the digital camera assembly may be configured to detect QR codes.

When installed within the protrusion 406, the digital camera assembly 424 may be sealed within the protrusion 406 by any number of gaskets, O-rings, portions of the housing, and so on. A flexible circuit may extend out of the protrusion 406 (e.g., out of the camera cavity defined by the protrusion 406) to an internal cavity of the wearable electronic device (e.g., an internal cavity 230, as depicted in FIG. 2). The flexible circuit may be any flexible circuit, such as a flexible dielectric with conductive traces, and may communicatively couple the digital camera assembly within the protrusion 406 with internal circuitry as described above. The protrusion 406 may further comprise a through-hole 407 extending through the protrusion 406 and a cover 420 positioned on ledges defined by the through-hole 407, such as described above.

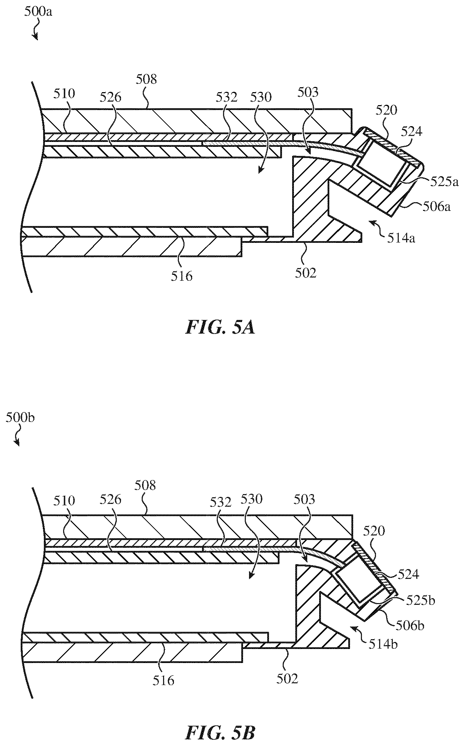

FIGs. 5A-5B illustrate example representations of sensor enclosure 506a-506b integrated with a housing 502 with respect to associated band slots. The precise views depicted in FIGs. 5A-5B are provided merely for explanatory purposes and other orientations of a sensor enclosure 506 are possible in accordance with the provided disclosure.

FIG. 5A illustrates an example wearable electronic device 500a with a protrusion 506a. The protrusion 506a may extend partially over the band slot 514a such that the bottom wall of the protrusion 506a defines a top wall of the band slot 514a. As described above, the protrusion 506a may define a camera cavity 525a configured to receive or secure a camera, such as a digital camera assembly 524. The protrusion 506a may be formed as a unibody structure along with the housing 502 and may be machined through any number of processes (e.g., metal or glass machining). The wearable electronic device 500a may include a transparent cover 508, a display 510 underneath the transparent cover 508, a first circuit assembly 526, and a second circuit assembly 516. The digital camera assembly 524 may be coupled to the first circuit assembly 526 via a flexible circuit, such as the flexible circuit 532. As discussed above, the housing 502 may define an internal cavity 530 which may hold a battery or other electronic components. As discussed above, a cover 520 may be positioned within a through-hole, over the camera 524. A passage 503 may couple the internal cavity 530 with the camera cavity 525a such that a flexible circuit 532 can extend from the digital camera assembly 524 to the first circuit assembly 526.

A size, shape, and/or position of the protrusion 506a may define a shape of the band slot 514a. That is, an angle of the protrusion 506a with respect to the transparent cover 508 may be between 30° and 60°. In some implementations, the size/shape of the band slot 514a may be different than a size/shape of a band slot on an opposite end of the wearable electronic device 500a, as the opposite end of the wearable electronic device 500a may not include a protrusion.

FIG. 5B illustrates an example wearable electronic device 500b with a protrusion 506b presented at a steeper angle with respect to the transparent cover 508 (as compared with the embodiment depicted in FIG. 5A). In some examples, the protrusion 506b may be presented at an angle between 45° and 75°, though this range is merely provided as an exemplary range. As depicted in FIG. 5B, the protrusion 506b may result in a band slot 514b that has a different shape as the band slot 514a depicted in FIG. 5A. For example, the band slot 514b may be smaller and may be configured to receive a smaller band or portion thereof. In some implementations, the band slot on an opposite end of the wearable electronic device 500b may have a shape different than the band slot 514b and a corresponding portion of the band may likewise be differently shaped. The protrusion 506b may further define a camera cavity 525b, which may have substantially the same dimensions as the camera cavity 525a, as the digital camera assembly 524 may be consistently shaped across the depicted embodiments.

Both FIGs. 5A and 5B illustrate a display 510 with a housing 502 at least partially enclosing the display 510. As discussed, a transparent cover 508 may be positioned over the display. The housing 502 may, in some implementations, include an enclosure component, such as a metal or glass enclosure component. With reference to FIGs. 1A-1B, the housing 502, and/or the enclosure component of the housing 502, may define a front surface, a back surface, and a pair of side surfaces extending from the front surface to the back surface. A band slot (e.g., band slots 514a or 514b) may extend across the front surface (e.g., between the pair of side surfaces across a width of the enclosure component) and may be configured to receive a band. Though not depicted in FIGs. 5A-5B, a corresponding band slot may extend between the pair of side surfaces and may be defined by the back surface of the metal enclosure component. This band slot (e.g., a second band slot) may be configured to receive a second portion of the band. A camera cavity 525a/525b may be positioned between the front surface and the band slot 514a/514b, as depicted in FIGs. 5A-5B. A digital camera assembly 524 may be positioned within the camera cavity 525a/525b.

FIGs. 6A-6B illustrate an example wearable electronic device 600 comprising a nonuniform band slot 614. The wearable electronic device 600 may include a transparent cover 608, a display 610 positioned below the transparent cover 608, a rotatable crown 612, a button 610, and a band 604. The wearable electronic device 600 may additionally comprise a housing 602, which may be a unibody housing.

In FIGs. 6A-6B, a digital camera assembly 625 may be positioned within the housing 602 without a protrusion. To achieve this, a through-hole may extend through the housing 602 at the band slot into an internal cavity defined by the housing 602. As depicted in FIG. 6B, the through-hole may interrupt the band slot such that the band slot does not extend through an entire width of the housing 602, but, instead, is interrupted at a central portion. As described above, a cover 620 may be positioned on the through-hole.

To account for the interruption of the band slot, at least one band 604, or a portion thereof, affixed to the housing 602 through the band slot may comprise a hole 605 that prevents the band 604 from coming into contact with the cover 620. The hole 605 in the band 604 may be of a sufficient size and/or shape so that the band 604 is not visible in images and/or videos captured by a camera placed within the housing.

FIG. 6B illustrates a cross-sectional view of the example wearable electronic device 600. As described above, the embodiment depicted in FIGs. 6A-6B does not include a protrusion, such as described with respect to other embodiments. Instead, a camera cavity 625 configured to receive or secure a camera, such as a digital camera assembly 624, may be defined by the housing 602 surrounding the band slot. The wearable electronic device 600 may include a transparent cover 608, a display 610 underneath the transparent cover 608, a first circuit assembly 626, and a second circuit assembly 616. The digital camera assembly 624 may be coupled to the first circuit assembly 626 via a flexible circuit, such as the flexible circuit 632. As discussed above, the housing 602 may define an internal cavity 630 which may hold a battery or other electronic components. As discussed above, a cover 620 may be positioned within a through-hole, over the camera 624.

In FIG. 6B, the digital camera assembly 624 may be positioned in the center of a band slot so as to interrupt the band slot. A digital camera assembly 624 may be positioned within the camera cavity 625 and may be positioned at an angle between about 60°-90°, though any angle may be used in accordance with the provided disclosure. Other features of the wearable electronic device 600 may be the same as described with respect to FIGs. 1A-5B and duplicative description is omitted for clarity.

FIGs. 7A-7C illustrate example digital camera assemblies which may be positioned in a camera cavity defined by a housing and/or a protrusion, such as described herein. The example digital camera assemblies are provided merely for explanatory purposes and any digital camera assembly and/or image sensor may be used in accordance with the provided disclosure.

FIG. 7A illustrates an example digital camera assembly 724a, which may be described herein as having a small form factor. The digital camera assembly 724a may be configured to capture light used to generate both images and video or, alternatively, one of images or video. The digital camera assembly 724a may be additionally configured to capture images at a resolution of between 0.5 megapixels (MP) to about 7 MP, though other resolutions may be used in some implementations. Video specifications may be up to about 1080p at 60 fps (frames per second) such as, for example, capturing video at 720p at 30 fps. The precise resolution of video or images may be downscaled in accordance with device settings (e.g., if a battery of a wearable electronic device is low, the image/video resolution may be downscaled). A lens associated with the digital camera assembly 724a may have three parts (e.g., 3P), may have an aperture of about f/2.2, and may have a camera angle between 60°-80°.

The digital camera assembly 724a may have certain dimensions, such as a width W₁, a height H₁, and a length L₁. The dimensions, including relative dimensions, are merely explanatory and any value may be used in accordance with the provided disclosure. In some examples, the digital camera assembly 724a may have a volume up to about 50 mm³ and may have a width W₁ of about 2.5 mm to about 4.0 mm, a length L₁ of about 6.0 mm to about 8.5 mm, and a height H₁ of about 1.25 mm to about 2.5 mm.

The digital camera assembly 724a may additionally include circuitry for image signal processing, including circuitry for ISP tuning. The on-board capabilities of the image signal processing may be limited and extended image signal processes may be performed on external circuit boards as described herein.

FIG. 7B illustrates an example digital camera assembly 724b, which may be described herein as having a medium form factor. The digital camera assembly 724b may be configured to capture light used to generate both images and video or, alternatively, either images or video. The digital camera assembly 724b may be additionally configured to capture images at a resolution of between 5.0 megapixels (MP) to about 10.0 MP, though other resolutions may be used in some implementations. Video specifications may be up to about 2K at 60 fps (frames per second) such as, for example, capturing video at 1080p at 30 fps. The precise resolution of video or images may be downscaled in accordance with device settings (e.g., if a battery of a wearable electronic device is low, the image/video resolution may be downscaled). A lens associated with the digital camera assembly 724b may have four parts (e.g., 4P), may have an aperture of about f/2.2, and may have a camera angle between 60°-80°.

The digital camera assembly 724b may be associated with certain dimensions, such as a width W₂, a height H₂, and a length L₂. The dimensions, including relative dimensions, are merely explanatory and any value may be used in accordance with the provided disclosure. In some examples, the digital camera assembly 724b may have a volume up to about 200 mm³ and may have a width W₁ of about 5.5 mm to about 7.0 mm, a length L₁ of about 5.5 mm to about 7.0 mm, and a height H₁ of about 3.5 mm to about 5.0 mm.

The digital camera assembly 724b may additionally include circuitry for image signal processing, including circuitry for ISP tuning. The on-board capabilities of the image signal processing may be limited and extended image signal processes may be performed on external circuit boards as described herein.

FIG. 7C illustrates an example digital camera assembly 724c, which may be described herein as having a large form factor. The digital camera assembly 724c may be configured to capture light used to generate both images and video or, alternatively, either images or video. The digital camera assembly 724c may be additionally configured to capture images at a resolution of between 8 megapixels (MP) to about 17 MP, though other resolutions may be used in some implementations. Video specifications may be up to about 8K at 60 fps (frames per second) such as, for example, capturing video at 4K at 60 fps. The precise resolution of video or images may be downscaled in accordance with device settings (e.g., if a battery of a wearable electronic device is low, the image/video resolution may be downscaled). A lens associated with the digital camera assembly 724c may have six parts (e.g., 6P), may have an aperture of about f/2.4, and may have a camera angle between 100°-140°.

The digital camera assembly 724c may be associated with certain dimensions, such as a width W₁, a height H₁, and a length L₁. The dimensions, including relative dimensions, are merely explanatory and any value may be used in accordance with the provided disclosure. In some examples, the digital camera assembly 724c may have a volume up to about 600 mm³ and may have a width W₁ of about 7.5 mm to about 10.0 mm, a length L₁ of about 7.5 mm to about 10.0 mm, and a height H₁ of about 5.5 mm to about 7.0 mm.

The digital camera assembly 724c may additionally include circuitry for image signal processing, including circuitry for ISP tuning. The on-board capabilities of the image signal processing may be limited and extended image signal processes may be performed on external circuit boards as described herein.

In accordance with the provided disclosure, a size of a protrusion and/or camera cavity may be established based on the dimensions of an associated camera. As a non-limiting example, a digital camera assembly having a large form factor may be positioned within a large protrusion and/or camera cavity and may, in some embodiments, appear as depicted in FIGs. 6A-6B. Additionally, a digital camera assembly with a small form factor may not require a protrusion and/or camera cavity with as much space and may be implemented in the embodiments depicted in FIG. 1A-1B. A form factor may also impact a size of a battery of the wearable electronic device, as a digital camera assembly with a small form factor may require a lower amount of battery capacity.

FIGs. 8A-8C illustrate an example implementation of a digital camera assembly 824a-824c positioned between a band slot 814 and a microphone 811 within a cavity defined by, or otherwise behind, a side wall of a housing 802. The cavity may referenced as a camera cavity and may be sized to secure a digital camera assembly. The camera cavity may be positioned inwards from a camera opening (e.g., an opening through the side wall of the housing). The camera cavity may be adjacent to other internal cavities defined by the housing 802, including an internal cavity configured to secure a battery and/or a haptic assembly. In some implementations, the digital camera assembly 824a-824c may replace a rotatable crown (e.g., the rotatable crown 112, as described with respect to FIGs. 1A-1B).

A digital camera assembly positioned within a camera cavity defined by the side wall may be configured for particular purposes. For example, the digital camera assembly may, when integrated within the side wall, be directed toward a hand of a user while the associated wearable electronic device is being worn. As the digital camera assembly may be directed toward a user's hand, the digital camera assembly may receive optical input in the form of gestures. Such gesture capture may be used for gesture recognition systems. Additionally, the digital camera assembly may be used to identify objects which a user is pointing to (e.g., by detecting a pointing gesture), may be used for text recognition (e.g., when directed toward written text), and so on.

FIG. 8A illustrates an example wearable electronic device 800a having a housing 802 defining a hole extending through the housing 802. The hole may typically be used to receive a shaft of a rotatable crown and a cavity (e.g., a camera cavity) may extend inward from the hole. In the embodiment illustrated in FIG. 8A, a cover 813 may be positioned over the hole and a digital camera assembly 824a may be positioned behind the cover 813 within a cavity so as to replace components of a digital crown. As depicted in FIG. 8A, the housing 802 may further define a band slot 814, which may be configured to receive a portion of a removeable band or strap. The wearable electronic device 800a may additionally comprise a microphone 811, which may receive sound through a hole through the housing 802. Though a microphone is described as corresponding to element 811, other input/output devices, such as a speaker, may be used in alternate embodiments. The microphone 811, and the associated hole through the housing 802, may be eliminated in some implementations. As depicted, the digital camera assembly 824a may be positioned within a cavity defined by a side wall of the housing 802 and may be positioned between the microphone 811 and the band slot 814.

A digital camera assembly 824a may be positioned behind the cover 813, within a cavity, with a vertical orientation (e.g., the digital camera assembly 824a may be orientated with a vertical orientation such that a side of the digital camera assembly 824a with a longer length is positioned in an up-down arrangement and a side of the digital camera assembly 824a with a shorter length is positioned in a left-right arrangement, as depicted in FIG. 8A).

To secure the digital camera assembly 824a in the vertical orientation within the hole positioned behind the cover 813, a number of brackets, or other structural components, may be provided to secure the digital camera assembly 824a to the housing 802.

FIG. 8B illustrates an example wearable electronic device 800b having a housing 802 and a digital camera assembly 824b positioned within a cavity which may ordinarily hold elements for a rotatable crown. The digital camera assembly 824b may be positioned within the crown enclosure 813 with a horizontal orientation (e.g., the digital camera assembly 824b may be orientated with a horizontal orientation such that a side of the digital camera assembly 824b with a longer length is positioned in a left-right arrangement and a side of the digital camera assembly 824b with a shorter length is positioned in an up-down arrangement, as depicted in FIG. 8B).

To secure the digital camera assembly 824b in the horizontal orientation within housing 802, a number of brackets, or other structural components, may be provided to secure the digital camera assembly 824b to the housing 802. In some implementations, as depicted in FIG. 8B, a cover 813 may be positioned within a hole extending through the housing 802, such that the digital camera assembly 824b may receive light used to generate images and/or video.

FIG. 8C illustrates an example wearable electronic device 800c having a housing 802 and a digital camera assembly 824c positioned within a cavity which may ordinarily hold elements for a rotatable crown. The digital camera assembly 824c may be a medium form factor or large form factor digital camera assembly 824c and may be positioned within the housing 802 with a vertical or horizontal orientation (e.g., while the digital camera assembly 824c may be in either orientation, since the digital camera assembly 824c is depicted as a square, such orientation is not visible in FIG. 8C).

To secure the digital camera assembly 824c within the housing 802, a number of brackets, or other structural components, may be provided to secure the digital camera assembly 824c to the housing 802. In some implementations, as depicted in FIG. 8C, a cover 813 may be positioned within a hole extending through the housing 802, such that the digital camera assembly 824C may receive light from an object. As the digital camera assembly 824c may have a medium or large form factor, a cavity within the housing 802 may be enlarged in some implementations to create enough space for the digital camera assembly 824c. Any number of machining processes, such as milling or drilling, may be implemented to remove material from the housing, which may be formed from a metal material. In addition, internal components of the wearable electronic device 800c may be rearranged and/or removed so as to create enough space in the housing 802 (e.g., by reducing a size of an internal battery). It is appreciated that, in some implementations, no additional machining process may be necessary to secure the digital camera assembly 824c within the housing 813 in a region which may ordinarily house a rotatable crown.

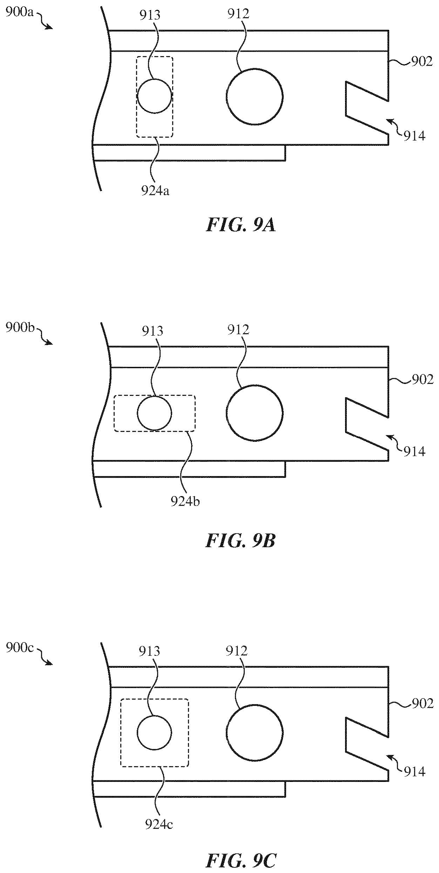

FIGs. 9A-9C illustrate an example implementation of a digital camera assembly 924a-924c positioned so as to replace a microphone positioned proximate to a rotatable crown 912. A microphone, as depicted in FIGs. 8A-8C, may be positioned between a button (e.g., the button 112) and a rotatable crown 912. In the implementations of FIGs. 9A-9C, the microphone may be removed leaving a space suitable for a digital camera assembly within the housing 902. That is, in the embodiments of FIGs. 9A-9C, the microphone may be replaced by the digital camera assembly 924a-924c such that the digital camera assembly 924a-924c is positioned between the button and the rotatable crown 912.

A digital camera assembly positioned within a camera cavity defined by the side wall may be configured for particular purposes. For example, the digital camera assembly may, when integrated within the side wall, be directed toward a hand of a user while the associated wearable electronic device is being worn. As the digital camera assembly may be directed toward a user's hand, the digital camera assembly may receive optical input in the form of gestures. Such gesture capture may be used for gesture recognition systems. Additionally, the digital camera assembly may be used to identify objects which a user is pointing to (e.g., by detecting a pointing gesture), may be used for text recognition (e.g., when directed toward written text), and so on.

FIG. 9A illustrates an example wearable electronic device 900a having a housing 902 defining a space for a digital camera assembly 924a and a band slot 914. The wearable electronic device 900a may additionally comprise a button on the side of the digital camera assembly 924a opposite from the rotatable crown 912, such as depicted in FIGs. 1A-1B, though the button may be eliminated in some implementations.

The housing 902 may define a gap which may otherwise house a microphone (e.g., an acoustic transducer). That is, since the microphone is removed, an empty space may become available. A digital camera assembly 924a may be positioned within the housing 902 at this location with a vertical orientation (e.g., the digital camera assembly 924a may be orientated with a vertical orientation such that a side of the digital camera assembly 924a with a longer length is positioned in an up-down arrangement and a side of the digital camera assembly 924a with a shorter length is positioned in a left-right arrangement, as depicted in FIG. 9A).

To secure the digital camera assembly 924a in the vertical orientation within the housing 902, a number of brackets, or other structural components, may be provided to secure the digital camera assembly 924a to the housing 902. In some implementations, such as depicted in FIG. 9A, a cover 913 may be positioned within a hole extending through the housing 902 over the cavity defined by the housing 902 which may ordinarily housing a microphone, such that the digital camera assembly 924a may receive light from an object.

FIG. 9B illustrates an example wearable electronic device 900b having a housing 902 defining a space for a digital camera assembly 924b and a band slot 914. The wearable electronic device 900b may additionally comprise a button on the side of the digital camera assembly 924b opposite from the rotatable crown 912, such as depicted in FIGs. 1A-1B, though the button may be eliminated in some implementations.

The housing 902 may define a gap which may otherwise house a microphone (e.g., an acoustic transducer). That is, since the microphone is removed, an empty space may become available. A digital camera assembly 924b may be positioned within the housing 902 at this location with a horizontal orientation (e.g., the digital camera assembly 924b may be orientated with a horizontal orientation such that a side of the digital camera assembly 924b with a longer length is positioned in a left-right arrangement and a side of the digital camera assembly 924b with a shorter length is positioned in an up-down arrangement, as depicted in FIG. 9B).

To secure the digital camera assembly 924b in the horizontal orientation within the housing 902, a number of brackets, or other structural components, may be provided to secure the digital camera assembly 924b to the housing 902. In some implementations, such as depicted in FIG. 9B, a cover 913 may be positioned within a hole extending through the housing 902 over the cavity defined by the housing 902 which may ordinarily housing a microphone, such that the digital camera assembly 924b may receive light from an object.

FIG. 9C illustrates an example wearable electronic device 900c having a housing 902 defining a space for a digital camera assembly 924c and a band slot 914. The wearable electronic device 900c may additionally comprise a button on the side of the digital camera assembly 924c opposite from the rotatable crown 912, such as depicted in FIGs. 1A-1B, though the button may be eliminated in some implementations.

The housing 902 may define a gap which may otherwise house a microphone (e.g., an acoustic transducer). That is, since the microphone is removed, an empty space may become available. A medium form factor or large form factor digital camera assembly 924c may be positioned within the housing 902 with a vertical or horizontal orientation (e.g., while the digital camera assembly 924c may be in either orientation, since the digital camera assembly 924c is depicted as a square, such orientation is not visible in FIG. 8C).

To secure the digital camera assembly 924c within the housing 902, a number of brackets, or other structural components, may be provided to secure the digital camera assembly 924c to the housing 902. In some implementations, a cover 913 may be positioned within a hole extending through the housing 902 over a hole defined by the housing 902, such that the digital camera assembly 924c may receive light, through a transparent cover, used to generate images and/or video. As the digital camera assembly 924c may have a medium or large form factor, a microphone enclosure may be enlarged in some implementations to create enough room for the digital camera assembly 924c. Any number of machining processes, such as milling or drilling, may be implemented to remove material from the housing, which may be formed from a metal material. In addition, internal components of the wearable electronic device 900c may be rearranged and/or removed so as to create enough space in the microphone enclosure (e.g., by reducing a size of an internal battery). It is appreciated that, in some implementations, no additional machining process may be necessary to secure the digital camera assembly 924c within the housing 902.

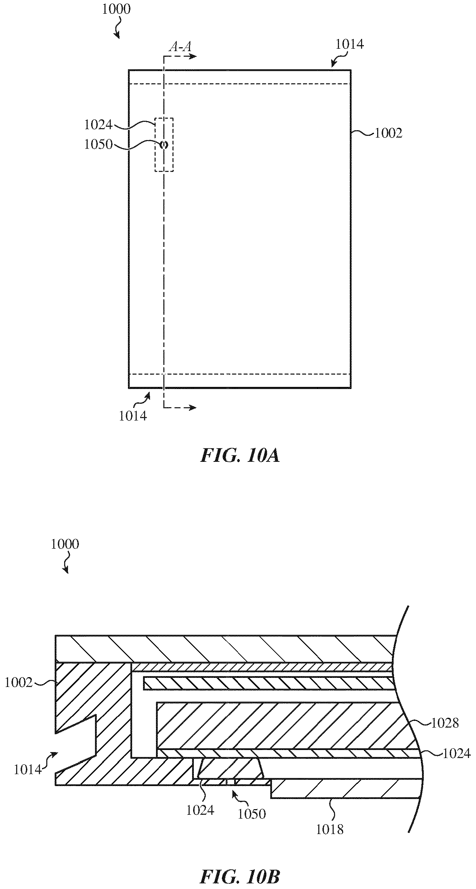

FIGs. 10A-10B illustrate an alternate implementation of a digital camera assembly 1024 integrated into a wearable electronic device 1000. In the embodiment depicted in FIGs. 10A-10B, a digital camera assembly 1024 is positioned proximate to a rear surface of a wearable electronic device 1000. The rear surface may be part of the housing 1002. In some implementations, the rear surface may be fully or partially transparent so as to allow light to be received by the camera 1024. In some implementations, the rear surface may appear opaque in the visible spectrum, but may be transparent to infrared or ultraviolet light. The rear surface may further be fully opaque and may define a hole 1050, through which light may be received at the digital camera assembly 1024. While the digital camera assembly 1024 is depicted as being outside of the boundaries of the rear cover (see FIG. 10B), in some implementations the digital camera assembly 1024 may be positioned within the boundaries of the rear cover.

As the digital camera assembly 1024 is directed to the rear surface of the wearable electronic device 1000, the digital camera assembly 1024 may be directed to a body part of a user while the wearable electronic device 1000 is being worn. For example, if the wearable electronic device 1000 is a watch, the digital camera assembly 1024 may be directed to a wrist of a user. Due to such an arrangement, the digital camera assembly 1024 may be configured to detect biometric signals, such as blood flow, body temperature, heart rate, and so on. As discussed above, these signals may be perceived via ultraviolet or infrared light and may not be detectible in the visible spectrum. As such, the digital camera assembly 1024 may be an infrared or ultraviolet camera.

The digital camera assembly 1024 may also be used to capture light from an object for traditional images and/or videos and may be operated when detached from a user. This may address privacy concerns by ensuring that the digital camera assembly 1024 is in use only when intended by the user (e.g., when not worn by the user).

The digital camera assembly 1024 may be positioned proximate to a band slot 1014 and/or a rotatable crown. Though the digital camera assembly 1024 is illustrated in a particular position, a location of the digital camera assembly 1024 is not limited to any particular location and may be positioned anywhere on the rear side of the wearable electronic device 1000 in accordance with the discussed principles. In some implementations, the digital camera assembly 1024 is positioned behind the rear cover so as to receive light that passes through the rear cover.

FIG. 10B illustrates a cross-sectional view of the wearable electronic device 1000 across line *A-A* as depicted in FIG. 10A. As depicted in FIG. 10B, the digital camera assembly 1024 is proximate to and/or in contact with a rear surface of the housing 1002. The digital camera assembly 1024 may additionally be in contact with a second circuit assembly 1016. The second circuit assembly 1016, which may be a circuit on a printed circuit board, may include conductive traces and electrical components to act as a controller and/or to supply power to and from the digital camera assembly 1024.

As depicted in FIG. 10B, a hole 1050 may extend through the rear surface of the housing 1002. Light may be received by the digital camera assembly 1024 through the hole 1050. In some implementations, the hole 1050 may be covered by a cover, such as discussed herein.

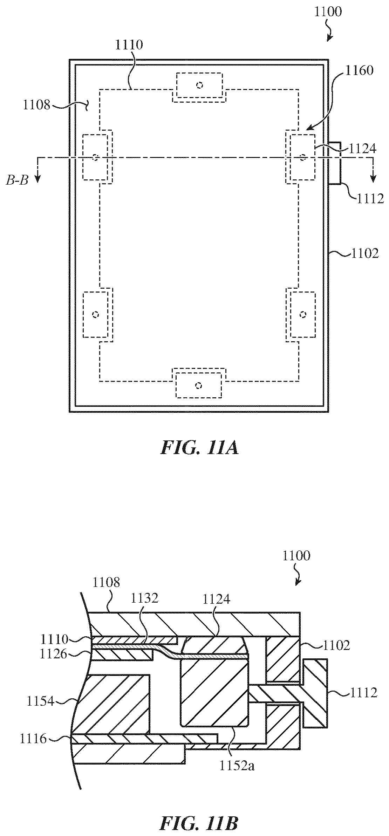

With respect to FIGs. 11A-11D, a digital camera assembly may be positioned within a notch defined by a display through a front side of a wearable electronic device. Such a digital camera assembly may be used for a number of purposes and may, in some implementations, be configured to receive light for self-photographs (e.g., selfies) and/or for video conferencing. In some implementations, the digital camera assembly may be provided with circuitry and/or program instructions for detecting a person's health conditions through facial images, such as a person's complexion.

FIGs. 11A-11D illustrate an alternate implementation of a digital camera assembly integrated into a wearable electronic device. In the embodiment depicted in FIGs. 11A-11D, multiple digital camera assemblies 1124 are positioned within respective notches 1160. Though FIG. 11A depicts multiple digital camera assemblies 1124, it is noted that only a portion of the digital camera assemblies 1124 may be provided within any one wearable electronic device. For example, only one digital camera assembly and associated notch may be provided in some implementations.

As discussed above, the front surface of the wearable electronic device 1100 may be defined by a transparent cover 1108 and a display 1110 positioned within a housing 1102. As depicted in FIG. 11A, a notch 1160 may be cut out of the display 1110 so that an underlying digital camera assembly 1124 may be positioned within the internal cavity of the wearable electronic device 1100. The notch 1160 may be sized to avoid contact or interference with the underlying digital camera assembly 1124, such as illustrated in FIG. 11B. A location of the notch 1160 and associated digital camera assembly 1124 may be located at a number of positions with respect to the display 1110 and/or housing 1102. For example, a notch/digital camera assembly pair may be positioned at a top edge location, a northwest edge location, a northeast edge location, a southwest edge location, a southeast edge location, and/or a bottom edge location.

As illustrated in FIG. 11B, which is a cross-section across line *B-B* as depicted in FIG. 11A, the digital camera assembly 1124 may be positioned proximate to an internal portion 1152 of a rotatable crown 1112. In particular, and as depicted in FIG. 11B, the digital camera assembly 1124 may be placed on a portion 1152 of the rotatable crown 1112 that is positioned within the internal cavity of the wearable electronic device 1100. As additionally depicted in FIG. 11B, the display 1110 may be terminated at a location before reaching the digital camera assembly 1124, so that the digital camera assembly 1124 may receive light directly through the transparent cover 1108. As further depicted in FIG. 11B, a digital camera assembly 1124 may be supported on the portion 1152, may be coupled to a first circuit assembly 1126 via a flexible circuit 1132, and may abut or otherwise be proximate to a transparent cover 1108. As described above, the wearable electronic device 1100 may additionally include a haptic device 1154 and a second circuit assembly 1116.

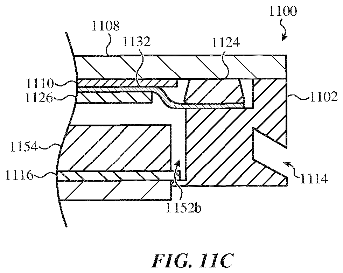

As depicted in FIG. 11C which is a cross section of an example top edge digital camera assembly, the digital camera assembly 1124 may be positioned so as to be supported on a portion 1152 extending from the housing 1102 proximate to a band slot 1114. That is, unlike the embodiment depicted in FIG. 11B, the digital camera assembly 1124 may be supported by a portion 1152 of the housing 1102 and/or a portion of the band slot 1114 rather than the rotatable crown 1112. As depicted in FIG. 11C, the display 1110 may be terminated at a location before reaching the digital camera assembly 1124, so that the digital camera assembly 1124 may receive light directly through the transparent cover 1108. As further depicted in FIG. 11C, a digital camera assembly 1124 may be supported on the portion 1152, may be coupled to a first circuit assembly 1126 via a flexible circuit 1132, and may abut or otherwise be proximate to a transparent cover 1108. As described above, the wearable electronic device 1100 may additionally include a haptic device 1154 and a second circuit assembly 1116.

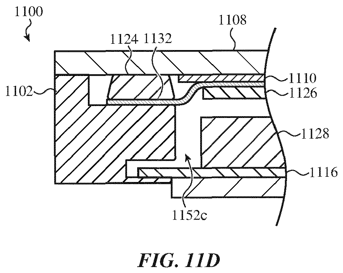

As depicted in FIG. 11D, which is a cross-section of an example northwest edge digital crown assembly, the digital camera assembly 1124 may be positioned proximate to an internal cavity defined by the housing 1102. The digital camera assembly 1124 may be supported by a portion 1152 of the housing 1102. As depicted in FIG. 11D, the display 1110 may be terminated at a location before reaching the digital camera assembly 1124, so that the digital camera assembly 1124 may receive light directly through the transparent cover 1108. As further depicted in FIG. 11D, a digital camera assembly 1124 may be supported on the portion 1152, may be coupled to a first circuit assembly 1126 via a flexible circuit 1132, and may abut or otherwise be proximate to a transparent cover 1108. As described above, the wearable electronic device 1100 may additionally include a battery 1128 and a second circuit assembly 1116.

As described above, one aspect of the present technology is the gathering and use of data from a user. The present disclosure contemplates that in some instances this gathered data may include personal information data that uniquely identifies or can be used to contact or locate a specific person. Such personal information data can include demographic data, location-based data, telephone numbers, email addresses, twitter IDs (or other social media aliases or handles), home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, the personal information data can be used to provide haptic or audiovisual outputs that are tailored to the user. Further, other uses for personal information data that benefit the user are also contemplated by the present disclosure. For instance, health and fitness data may be used to provide insights into a user's general wellness, or may be used as positive feedback to individuals using technology to pursue wellness goals.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act ("HIPAA"); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of determining spatial parameters, the present technology can be configured to allow users to select to "opt in" or "opt out" of participation in the collection of personal information data during registration for services or anytime thereafter. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data at a city level rather than at an address level), controlling how data is stored (e.g., aggregating data across users), and/or other methods.

Features implementing functions may also be physically located at various positions, including being distributed such that portions of functions are implemented at different physical locations. Also, as used herein, including in the claims, "or" as used in a list of items prefaced by "at least one of" indicates a disjunctive list such that, for example, a list of "at least one of A, B, or C" means A or B or C or AB or AC or BC or ABC (*i.e.,* A and B and C). Further, the term "exemplary" does not mean that the described example is preferred or better than other examples.

The foregoing description, for purposes of explanation, used specific nomenclature to provide a thorough understanding of the described embodiments. However, it will be apparent to one skilled in the art that the specific details are not required in order to practice the described embodiments. Thus, the foregoing descriptions of the specific embodiments described herein are presented for purposes of illustration and description. They are not targeted to be exhaustive or to limit the embodiments to the precise forms disclosed. It will be apparent to one of ordinary skill in the art that many modifications and variations are possible in view of the above teachings.

## Claims

1. A wearable electronic watch (200) comprising:
a display (210);
a housing (202) at least partially enclosing the display (210) and comprising a metal enclosure component, the metal enclosure component defining:
a front surface defining a first portion surrounding the display (210), and a second portion extending at an angle with respect to the first portion, the second portion of the front surface defining a camera opening;
a back surface opposite to the front surface;
a first side surface extending from the front surface to the back surface and defining a first band slot (214) extending across a width of the enclosure component, the first band slot positioned below the camera opening and configured to receive a first portion of a band (204);
a second side surface extending from the front surface to the back surface, separated from the first side surface by the display, and defining a second band slot (214) configured to receive a second portion of the band (204); and
a digital camera assembly (224) positioned inward of the camera opening and above the first band slot (214).

2. The wearable electronic watch (200) of claim 1, wherein:
the digital camera assembly (224) is positioned within a camera cavity (225) defined by the housing (202);
the metal enclosure component further defines an internal cavity (230) and a passage (203) extending between the internal cavity (230) and the camera cavity (225);
the display (210) is positioned at least partially within the internal cavity (230); and
the wearable electronic device (200) further comprises:
a circuit assembly (226) positioned within the internal cavity (230) and operably coupled to the display (210); and
a flexible circuit (232) passing through the passage (203) and operably coupling the digital camera assembly (224) to the circuit assembly (226).

3. The wearable electronic watch (200) of claim 2, wherein the camera cavity (225) is configured to receive the digital camera assembly (224).

4. The wearable electronic watch (200) of any preceding claim, wherein the digital camera assembly (224) has a width that is greater than a diameter of the camera opening.

5. The wearable electronic watch (200) of any preceding claim, wherein:
the metal enclosure component further defines a ledge (422a) that surrounds the camera opening; and
the wearable electronic device further comprises a transparent cover (420) positioned on the ledge (422a).

6. The wearable electronic watch (200) of claims 2-5, wherein:
the first band slot (214) is defined by an upper wall and a lower wall of the metal enclosure component; and
the upper wall at least partially defines the camera cavity (225).

7. The wearable electronic watch (200) of any preceding claim, wherein the digital camera assembly (224) is configured to capture images at a resolution between 0.9 megapixels and 3 megapixels.

8. The wearable electronic watch (200) of any preceding claim, wherein:
the housing (202) defines a rear opening; and
the wearable electronic device (200) further comprises:
a rear cover (218) positioned over the rear opening; and
a sensor array positioned within the rear opening.

9. The wearable electronic watch (200) of claim 1, wherein the metal enclosure component defines a camera cavity (225) positioned inward from the camera opening; and further comprising:
a battery (228) positioned within an internal cavity (230);
a haptic device (254) positioned within the internal cavity (230) and configured to produce a haptic output along an external surface of the housing (202);
a circuit assembly (226) positioned within the internal cavity (230) and operably coupled to the battery (228) and the haptic device (254); and
the digital camera assembly (224) is operably coupled to the circuit assembly (226) by a flexible circuit.

10. The wearable electronic watch (200) of claim 9, wherein:
the housing (202) defines a passage (203) extending between the camera cavity (225) and the internal cavity (230);
the flexible circuit extends through the passage (203); and
the the camera cavity (225) is configured to receive the digital camera assembly (224).

## Patentansprüche

1. Tragbare elektronische Uhr (200), umfassend: eine Anzeige (210); ein Gehäuse (202), das die Anzeige (210) zumindest teilweise umschließt und eine Metallgehäusekomponente umfasst, wobei die Metallgehäusekomponente Folgendes definiert: eine Vorderfläche, die einen ersten Abschnitt definiert, der die Anzeige (210) umgibt, und einen zweiten Abschnitt, der sich in einem Winkel in Bezug auf den ersten Abschnitt erstreckt, wobei der zweite Abschnitt der Vorderfläche eine Kameraöffnung definiert; eine Rückfläche gegenüber der Vorderfläche; eine erste Seitenfläche, die sich von der Vorderfläche zu der Rückfläche erstreckt und einen ersten Bandschlitz (214) definiert, der sich über eine Breite der Gehäusekomponente erstreckt, wobei der erste Bandschlitz unter der Kameraöffnung positioniert und konfiguriert ist, um einen ersten Abschnitt eines Bands (204) aufzunehmen; eine zweite Seitenfläche, die sich von der Vorderfläche zu der Rückfläche erstreckt, von der ersten Seitenfläche durch die Anzeige getrennt ist und einen zweiten Bandschlitz (214) definiert, der konfiguriert ist, um einen zweiten Abschnitt des Bands (204) aufzunehmen; und eine digitale Kameraanordnung (224), die innerhalb der Kameraöffnung und über dem ersten Bandschlitz (214) positioniert ist.

2. Tragbare elektronische Uhr (200) nach Anspruch 1, wobei: die digitale Kameraanordnung (224) innerhalb eines Kamerahohlraums (225) positioniert ist, der durch das Gehäuse (202) definiert ist; die Metallgehäusekomponente ferner einen inneren Hohlraum (230) und einen Durchgang (203) definiert, der sich zwischen dem inneren Hohlraum (230) und dem Kamerahohlraum (225) erstreckt; die Anzeige (210) zumindest teilweise innerhalb des inneren Hohlraums (230) positioniert ist; und die tragbare elektronische Vorrichtung (200) ferner Folgendes umfasst: eine Schaltungsanordnung (226), die innerhalb des inneren Hohlraums (230) positioniert und betriebsfähig mit der Anzeige (210) gekoppelt ist; und eine flexible Schaltung (232), die durch den Durchgang (203) verläuft und die digitale Kameraanordnung (224) betriebsfähig mit der Schaltungsanordnung (226) koppelt.

3. Tragbare elektronische Uhr (200) nach Anspruch 2, wobei der Kamerahohlraum (225) konfiguriert ist, um die digitale Kameraanordnung (224) aufzunehmen.

4. Tragbare elektronische Uhr (200) nach einem der vorhergehenden Ansprüche, wobei die digitale Kameraanordnung (224) eine Breite aufweist, die größer als ein Durchmesser der Kameraöffnung ist.

5. Tragbare elektronische Uhr (200) nach einem der vorhergehenden Ansprüche, wobei: die Metallgehäusekomponente ferner eine Leiste (422a) definiert, die die Kameraöffnung umgibt; und die tragbare elektronische Vorrichtung ferner eine transparente Abdeckung (420) umfasst, die an der Leiste (422a) positioniert ist.

6. Tragbare elektronische Uhr (200) nach den Ansprüchen 2-5, wobei: der erste Bandschlitz (214) durch eine obere Wand und eine untere Wand der Metallgehäusekomponente definiert ist; und die obere Wand zumindest teilweise den Kamerahohlraum (225) definiert.

7. Tragbare elektronische Uhr (200) nach einem der vorhergehenden Ansprüche, wobei die digitale Kameraanordnung (224) konfiguriert ist, um Bilder mit einer Auflösung zwischen 0,9 Megapixel und 3 Megapixel aufzunehmen.

8. Tragbare elektronische Uhr (200) nach einem der vorhergehenden Ansprüche, wobei: das Gehäuse (202) eine hintere Öffnung definiert; und die tragbare elektronische Vorrichtung (200) ferner Folgendes umfasst: eine hintere Abdeckung (218), die über der hinteren Öffnung positioniert ist; und eine Sensoranordnung, die innerhalb der hinteren Öffnung positioniert ist.

9. Tragbare elektronische Uhr (200) nach Anspruch 1, wobei die Metallgehäusekomponente einen Kamerahohlraum (225) definiert, der innerhalb der Kameraöffnung positioniert ist; und ferner Folgendes umfasst: eine Batterie (228), die innerhalb eines inneren Hohlraums (230) positioniert ist; eine haptische Vorrichtung (254), die innerhalb des inneren Hohlraums (230) positioniert und konfiguriert ist, um eine haptische Ausgabe entlang einer Außenfläche des Gehäuses (202) zu erzeugen; eine Schaltungsanordnung (226), die innerhalb des inneren Hohlraums (230) positioniert und betriebsfähig mit der Batterie (228) und der haptischen Vorrichtung (254) gekoppelt ist; und die digitale Kameraanordnung (224) durch eine flexible Schaltung betriebsfähig mit der Schaltungsanordnung (226) gekoppelt ist.

10. Tragbare elektronische Uhr (200) nach Anspruch 9, wobei: das Gehäuse (202) einen Durchgang (203) definiert, der sich zwischen dem Kamerahohlraum (225) und dem inneren Hohlraum (230) erstreckt; die flexible Schaltung sich durch den Durchgang (203) erstreckt; und der Kamerahohlraum (225) konfiguriert ist, um die digitale Kameraanordnung (224) aufzunehmen.

## Revendications

1. Une montre électronique pouvant être portée sur soi (200), comprenant :
un afficheur (210) ;
un boîtier (202) enveloppant au moins partiellement l'afficheur (210) et comprenant un composant d'enveloppement métallique, le composant d'enveloppement métallique définissant :
une surface avant définissant une première partie entourant l'afficheur (210), une seconde partie s'étendant en faisant un angle par rapport à la première partie, la seconde partie de la surface avant définissant une ouverture de caméra ;
une surface arrière opposée à la surface avant ;
une première surface latérale s'étendant de la surface avant à la surface arrière et définissant une première fente de bracelet (214) s'étendant en travers d'une largeur du composant d'enveloppement, la première fente de bracelet étant positionnée au-dessous de l'ouverture de caméra et étant configurée pour recevoir une première partie d'un bracelet (204) ;
une seconde surface latérale s'étendant de la surface avant à la surface arrière, séparée de la première surface latérale par l'afficheur, et définissant une seconde fente de bracelet (214) configurée pour recevoir une seconde partie du bracelet (204) ; et
un bloc de caméra numérique (224) positionné vers l'intérieur de l'ouverture de caméra et au-dessus de la première fente de bracelet (214).

2. La montre électronique pouvant être portée sur soi (200) de la revendication 1, dans laquelle :
le bloc de caméra numérique (224) est positionné à l'intérieur d'une cavité de caméra (225) définie par le boîtier (202) ;
le composant d'enveloppement métallique définit en outre une cavité interne (230) et un passage (203) s'étendant entre la cavité interne (230) et la cavité de caméra (225) ;
l'afficheur (210) est positionné au moins partiellement à l'intérieur de la cavité interne (230) ; et
le dispositif électronique à porter sur soi (200) comprend en outre :
un bloc de circuit (226) positionné à l'intérieur de la cavité interne (230) et couplé de manière opérante à l'afficheur (210) ; et
un circuit flexible (232) traversant le passage (203) et couplant deux façons opérantes le bloc de caméra numérique (224) au bloc de circuit (226).

3. La montre électronique pouvant être portée sur soi (200) de la revendication 2, dans laquelle la cavité de caméra (225) est configurée pour recevoir le bloc de caméra numérique (224).

4. La montre électronique pouvant être portée sur soi (200) de l'une des revendications précédentes, dans laquelle le bloc de caméra numérique (224) a une largeur qui est supérieure à un diamètre de l'ouverture de caméra.

5. La montre électronique pouvant être portée sur soi (200) de l'une des revendications précédentes, dans laquelle :
le composant d'enveloppement métallique définit en outre un rebord (422a) qui entoure l'ouverture de caméra ; et
le dispositif électronique à porter sur soi comprend en outre un capot transparent (420) positionné sur le rebord (422a).

6. La montre électronique pouvant être portée sur soi (200) des revendications 2 à 5, dans laquelle :
la première fente de bracelet (214) est définie par une paroi supérieure et une paroi inférieure du composant d'enveloppement métallique ; et
la paroi supérieure définit au moins partiellement la cavité de caméra (225).

7. La montre électronique pouvant être portée sur soi (200) de l'une des revendications précédentes, dans laquelle le bloc de caméra numérique (224) est configuré pour capturer des images à une résolution entre 0,9 mégapixel et 3 mégapixels.

8. La montre électronique pouvant être portée sur soi (200) de l'une des revendications précédentes, dans laquelle :
le boîtier (202) définit une ouverture arrière ; et
le dispositif électronique à porter sur soi (200) comprend en outre :
un capot arrière (218) positionné au-dessus de l'ouverture arrière ; et
un réseau capteur positionné à l'intérieur de l'ouverture arrière.

9. La montre électronique pouvant être portée sur soi (200) de la revendication 1, dans laquelle le composant d'enveloppement métallique définit une cavité de caméra (225) positionnée vers l'intérieur depuis l'ouverture de caméra ; et comprenant en outre :
une batterie (228) positionnée à l'intérieur d'une cavité interne (230) ;
un dispositif haptique (254) positionné à l'intérieur de la cavité interne (230) et configuré pour produire une sortie haptique le long d'une surface externe du boîtier (202) ;
un bloc de circuit (226) positionné à l'intérieur de la cavité interne (230) et couplé de manière opérante à la batterie (228) et au dispositif haptique (254) ; et
le bloc de caméra numérique (224) est couplé de manière opérante au bloc de circuit (226) par un circuit flexible.

10. La montre électronique pouvant être portée sur soi (200) de la revendication 9, dans laquelle :
le boîtier (202) définit un passage (203) s'étendant entre la cavité de caméra (225) et la cavité interne (230) ;
le circuit flexible s'étend au travers du passage (203) ; et
la cavité de caméra (225) est configurée pour recevoir le bloc de caméra numérique (224).
